(19)

**Europäisches Patentamt**
**European Patent Office**
**Office européen des brevets**

(11)  **EP 2 560 921 B1**

(12)  **EUROPEAN PATENT SPECIFICATION**

(45) Date of publication and mention
of the grant of the patent:
**30.03.2016  Bulletin 2016/13**

(51) Int Cl.:
***C02F 1/461*** *(2006.01)*   ***C02F 103/42*** *(2006.01)*
***C02F 1/467*** *(2006.01)*   ***C02F 1/46*** *(2006.01)*

(21) Application number: **10721556.8**

(22) Date of filing: **22.04.2010**

(86) International application number:
**PCT/IB2010/051764**

(87) International publication number:
**WO 2011/132021 (27.10.2011 Gazette 2011/43)**

(54) **METHOD FOR TREATMENT OF WATER AGAINST THE FORMATION OF BACTERIA AND ALGAE**

VERFAHREN ZUR BEHANDLUNG VON WASSER ZUM SCHUTZ VOR DER BILDUNG VON BAKTERIEN UND ALGEN

PROCÉDÉ DE TRAITEMENT DE L'EAU POUR ÉVITER LA FORMATION DE BACTÉRIES ET D'ALGUES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**27.02.2013  Bulletin 2013/09**

(73) Proprietor: **Periso SA**
**6810 Isone (CH)**

(72) Inventors:
• **TONEATTO, Domenico**
**CH-5734 Reinach AG (CH)**
• **VOLO, Cataldo**
**I-21030 Mesenzana (VA) (IT)**
• **MALCOTTI, Gianmarco**
**I-21010 Porto Valtravaglia (VA) (IT)**

(74) Representative: **Zardi, Marco**
**M. Zardi & Co. SA**
**Via Pioda 6**
**6900 Lugano (CH)**

(56) References cited:
**WO-A1-2009/025546    US-A- 5 599 437**
**US-A- 5 776 529    US-A1- 2006 086 604**

• **SUBASH RAI ET AL: "Effect of Modulated Microwave Frequencies on the Physiology of a Cyanobacterium, Anabaena doliolum",** ELECTRO- AND MAGNETOBIOLOGY, NEW YORK, NY, US, vol. 18, no. 3, 1 January 1999 (1999-01-01), pages 221-232, XP009181427, ISSN: 1061-9526, DOI: 10.3109/15368379909022578

Remarks:
The file contains technical information submitted after the application was filed and not included in this specification

## Description

Field of application

The present invention relates to a method for treatment of water against the formation of bacteria and algae.

Prior art

In the field of water treatment, methods are known which provide for mixing the water to be treated with a predetermined amount of chlorine which is harmful for bacteria and algae and prevents the reproduction thereof. The addition of chlorine is commonly used in household water supply mains, in small percentages, but also in swimming pools, in higher percentages.

Treatment methods are also known, which provide for filtering the water by a filter or multiple composite filters, provided with very small holes, in the order of microns, capable of retaining some bacteria.

The above means may be combined so that the water is added with chlorine and filtered before being dispensed, for example through an active carbon filter capable of retaining chlorine and derivatives thereof, thus obtaining drinking water with a high bacteriological purity, and free from the undesired taste of chlorine.

However, such methods are not effective against several bacteria present in water that pass through the filter. Moreover, the impurities and the bacteria retained by the filter reduce the filtering capability thereof, unless frequent maintenance interventions are carried out on the purification device, which consist in cleaning or replacing the filter. Finally, the addition of chlorine should be checked periodically. In fact, an excessive amount of chlorine in the distribution network may be unpleasant or harmful, if ingested; in a swimming pool, the excessive amount of chlorine tends to dry the swimmers' skin.

US 2006/086604 discloses a voltage generator system having an output square wave linearly changing from 102-106 kHz. US 5,776,529 discloses an apparatus providing pulse frequencies of a square wave of 10 Hz for antimicrobial treatment of food. WO 2009/025546 discloses an alternating voltage with a frequency of about 100 kHz used to kill micro-organisms.

The problem at the basis of the present invention is to devise a method for treatment of water which is not subject to wear over time, due to the build up of impurities, bacteria or algae, and which does not introduce unpleasant and in some cases harmful substances in water to be treated, such as chlorine, such method being also effective against bacteria and algae which cannot be retained by the filters, substantially overcoming all the limits that still affect the systems according to the prior art.

Brief description of the drawings

Figure 1 shows a graph of current voltage as a function of time, generated for treating water.

Figure 2 shows a graph of current voltage as a function of time, according to an aspect of the method of figure 1;

Figure 3 shows a graph of current voltage as a function of time, according to another aspect of the method of figure 1;

Figure 4 shows a graph of current voltage as a function of time, according to a further aspect of the method of figure 1;

Figure 5 schematically shows a device for treatment of water used according to the present invention;

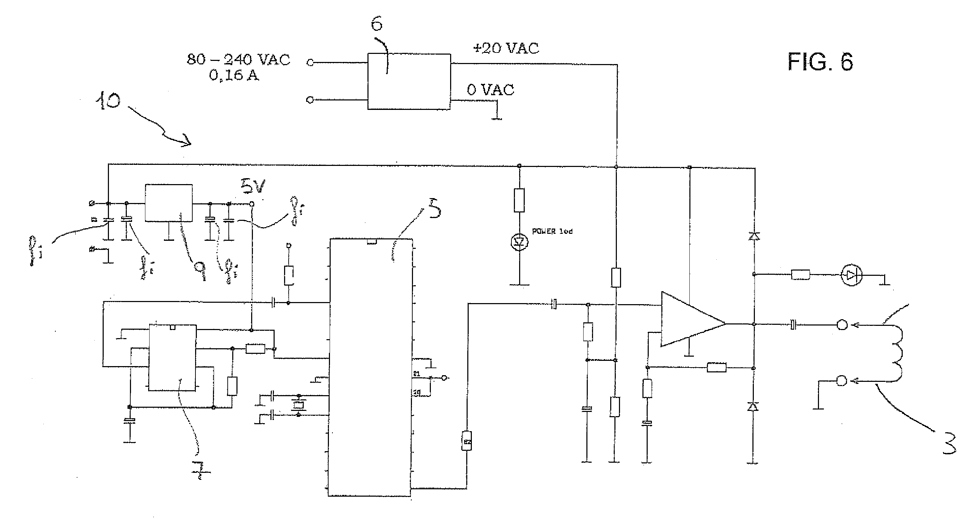

Figure 6 shows an electric circuit of the device used according to the present invention;

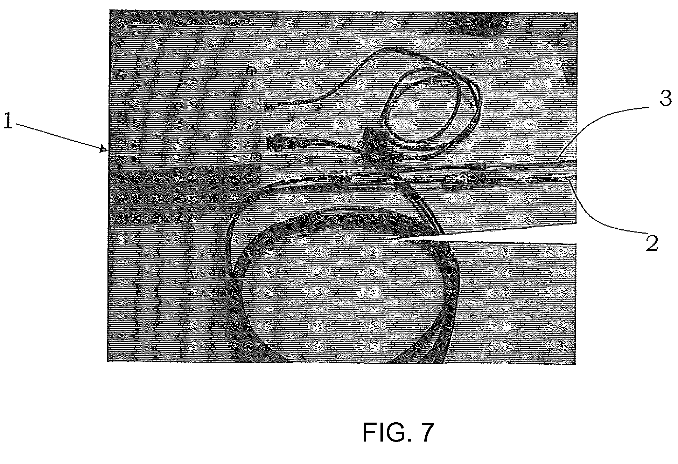

Figure 7 shows the device used according to the present invention.

Summary of the invention

The idea at the basis of the present invention is to insert an electrical current into the water to be treated which prevents the formation of algae or bacteria. In other words, the water to be treated is kept at a high level of purity not through the filtration or reduction of bacteria and algae but rather preventing the formation thereof.

Surprisingly, the applicant has observed that by varying the voltage frequency between a minimum value 1 and a maximum value of 100kHz, the current inserted in water is capable of preventing the formation of a plurality of bacteria and algae and of maintaining a high level of purity of water. It seems that this effect is due to the fact that such bacteria and algae are sensitive to at least an electrical voltage frequency ranging between 1 and 100kHz, such frequency, however, not being harmful to humans. In particular, each bacterium or algae is associated to its own frequency; when the electrical voltage frequency associated to the current introduced in water is substantially equal to the frequency of a bacterium or algae, the formation of such bacterium or algae is substantially prevented. Even more particularly, if a bacterium or algae is already present in the water to be treated, the bacterium resonates, i.e. bio-resonates, and it disintegrates if the current introduced in water is at a voltage frequency substantially equivalent to the bacterium or algae's own frequency.

Based on such idea of solution, the technical problem is solved by a method for treatment of water against the formation of bacteria and algae comprising the steps of generating a voltage V(t) and dispersing a corresponding current in the water to be treated, whereby the voltage V(t) generated is a square wave with a frequency (f*(t)) multiple of a frequency f(t) ranging between and 100kHz, said multiple frequency (f*(t)) is equivalent to a bio-resonance frequency of the bacteria and algae to be prevented, wherein said frequency (f(t)) is incremented with a multiplicative factor lower than 2 for cyclically scanning the range 1-100kHz and is associated to a predetermined duration corresponding to a resistance of the bacteria and algae to be prevented at said frequency (f(t)).

Advantageously, the method does not require the addition of any substances to the water to be treated, or the use of filters subject to wear.

The applicant has observed that the current introduced in water at a voltage with a predetermined frequency causes, among the water molecules, a ionic exchange that is hostile to the formation of a certain type of bacterium or algae sensitive to the voltage set.

According to an aspect of the invention, the generator varies the frequency f(t) at predetermined time intervals $\Delta t$. Time intervals may have an equal duration or a variable duration and frequencies f(t) may be set to "random" mode, in the range 1-100kHz or be changed progressively to cover the entire range of frequencies 1-100kHz in a predetermined time period. The applicant has found that the treatment of water according to a frequency variation scheme in the 1- 100kHz spectrum in a period of 1.5 or 2 hours has an optimum efficiency and substantially allows preventing the formation of any algae or bacterium harmful to humans. It has been noted that the optimum frequency variation is of 500 Hz every 30 seconds. Of course, nothing prevents the frequency variation scheme from being repeated in a longer or shorter time interval, for example 4 hours. According to another embodiment, the predetermined time interval $\Delta t_f$ is associated to a respective frequency f(t) of electrical voltage. For example, frequencies 10Hz, 20Hz, 30Hz, 40Hz, ..., are associated to respective intervals with duration $\Delta t_{10}$, $\Delta t_{20}$, $\Delta t_{30}$, $\Delta t_{40}$. This type of variation is advantageous because some bacteria or algae may be more resistant than others and a prolonged treatment of water with a voltage frequency in resonance with the own frequency of such bacteria allows better hindering the formation thereof.

According to another embodiment of the method for treatment of water, the voltage frequency f(t) is increased by a predetermined extent starting from a value of 1 Hz; when the frequency value of 100kHz is reached, the voltage frequency variation is cyclically repeated, that is, starting from the value of 1. Preferably, the method provides for waiting a few minutes between one frequency variation cycle and the next one. In particular, the method is implemented by a treatment device that provides for different schedules, each schedule being associated to a different waiting time between subsequent cycles.

Advantageously, the method according to the present invention may be applied to a water dispenser, for example upstream of a water dispensing tube connected to water mains or to a swimming pool, immersing two electrodes in the water to be treated, which receive voltage at a variable frequency from the generator; in particular, the free ends of the electrodes are immersed by a predetermined extent, for example by about 30 cm, in the water container, for example in the swimming pool, in this case in a position preferably sheltered from the swimmers, for example a recess protected by a grating wherethrough the water to be treated flows. The free ends of the electrodes are connected by hoses to the generator, which is preferably located in a dry place. Preferably, the electrodes are spaced by about 1 m and immersed in water by about 30 cm; this configuration has given an optimum efficiency in the tests conducted by the applicant.

According to an embodiment version of the invention, the current dispersion is obtained by an electrical winding located around a water feeding tube and in contact therewith.

According to the present invention, the frequencies generated create micro stresses between water molecules. The applicant believes that such micro stresses cause a so-called "rubbing" between the molecules which destabilises the electric balance thereof. The electric balance is stabilised again by low electrical intensity ionisation currents between the water molecules which prevent the formation of algae and bacteria.

The present disclosure also relates to a device for treatment of water against the formation of bacteria and algae. The device comprises a voltage generator 1 and at least one current dispersion circuit connected to the generator for receiving the input voltage. The voltage generated is a square wave and a microprocessor varies the square wave voltage frequency between the values 1 and 100kHz and a clock, connected to the microprocessor, sets a duration of the time interval wherein the microprocessor outputs a voltage at a certain frequency. Advantageously, the treatment device may be made with simple electrical components and does not require any treatment substances, such as chlorine, or material subject to wear, such as water treatment filters.

In particular, the dispersion circuit comprises at least two connected electrodes; a first electrode is connected to ground and a second electrode to the generator; opposite ends of the electrodes are intended to be immersed in water. Preferably, the electrodes are made of stainless steel.

According to an embodiment version, the dispersion circuit comprising an electrical winding intended for externally contacting a feeding tube or a dispenser, wherein the water to be treated flows.

The device comprises a low voltage direct current power supply, preferably at 24VDC, and a stabiliser interposed between the power supply and the generator, for providing a constant and steady voltage to the microprocessor, preferably of 5VDC. Advantageously, the device according to the present invention is not hazardous for humans since the current voltages are very low.

According to a preferred embodiment, the microprocessor is connected to a LED system the lighting intensity whereof varies according to the voltage frequency f(t) set by the microprocessor. Advantageously, the LED system provides a visual information relating to the voltage frequency set for the treatment of water.

Further features and advantages of the method according to the present invention will appear more clearly from an embodiment illustrated by way of a non-limiting example with reference to the annexed drawings.

The invention is defined by the appended claims.

Detailed description

With reference to the annexed figures, there will be described a method for treatment of water against the formation of bacteria and algae, for example for preventing such formations downstream of a drinking water dispensing conduit, such as a household tap or a public fountain, or in a swimming pool or at a spa, etc. The method provides for generating an electrical voltage V(t) and dispersing a corresponding current in the water to be treated, by a device more specifically described below, without adding any substance to the water to be treated. The current voltage is a low voltage supplied by a respective generator 1 supplied at low voltage, for example 5VDC.

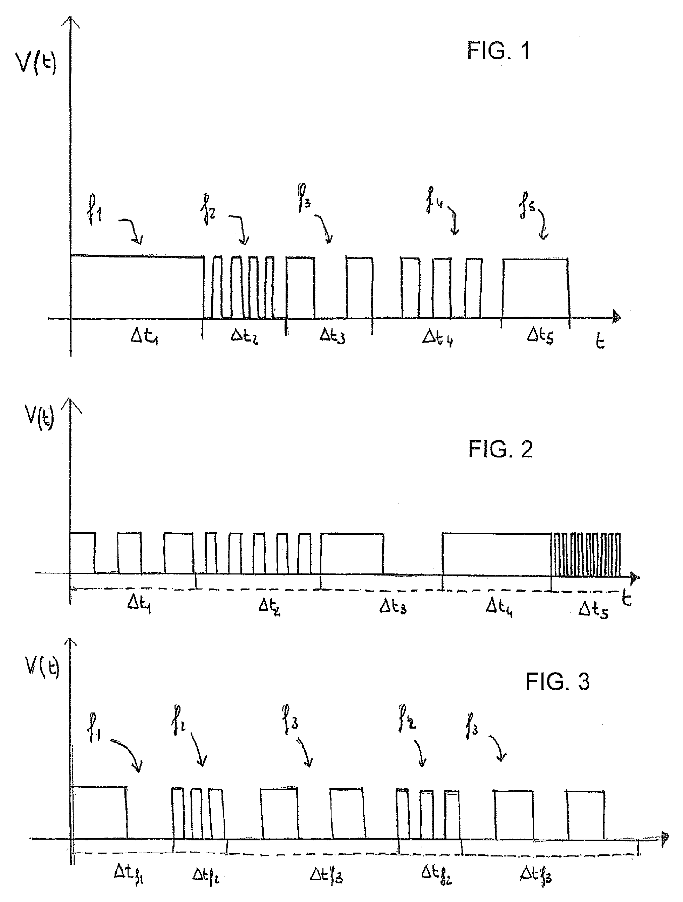

According to an embodiment, the voltage V(t) generated is a square wave with frequency f(t) ranging between 1 and 100kHz. Figure 1 schematically shows a pattern of the voltage V(t) as a function of time. In a first time interval $\Delta t_1$ the voltage is at a first frequency f1, which varies in a second interval $\Delta t_2$ having a different duration from the first interval $\Delta t_1$; for example, frequency f1 increases to a value f2 and the duration of interval $\Delta t_2$ decreases relative to the duration of interval $\Delta t_1$. In interval $\Delta t_3$ the frequency varies again, for example it decreases to the lower value f3 than value f2, and increases again to value f4>f3, in the corresponding interval $\Delta t_4$. In interval $\Delta t_5$ the frequency further varies, for example it decreases to value f5<f4.

According to this aspect, the frequencies of the electrical voltage in time intervals $\Delta t_1$-$\Delta t_5$ vary in a random manner between 1 and 100kHz, and the duration of the time intervals $\Delta t_i$ is also set "randomly", preferably between 10 and 30 seconds. In particular, the applicant has noted optimum results when the generator is set according to a cyclical scheme that provides for generating at least once a frequency ranging between 1 and 100Hz in a time interval of about 1.5 - 2 hours. This embodiment is particularly advantageous when there are no experimental data regarding the sensitivity of bacteria or algae to any frequency value and their resistance to electrical voltage frequencies. The harmonics generated by such frequencies contribute to widening the frequency band useful for the system.

The voltage V(t) generated is a square wave with frequency f*(t) multiple of the frequency f(t) ranging between 1 and 100kHz. In other words, frequency f*(t) is a harmonic of the base frequency between 1 and 100kHzf, i.e. an odd harmonic, since voltage V(t) is a square wave. According to the invention, the method is capable of preventing the formation of algae and bacteria having a bio-resonance frequency equivalent to the harmonic set.

According to the studies conducted by the applicant, each frequency value of voltage V(t) set by the generator corresponds to a current dispersed in the water to be treated which causes, among the water molecules, a ionic exchange that is hostile to the formation of at least one type of bacteria or algae sensitive to the voltage set V(t). In particular, by varying the voltage frequency between 1 and 100kHz, it is possible to maintain a high level of purity of water, preventing the formation of bacteria and algae. With reference to figure 2 there is shown the pattern of frequency. The time intervals $\Delta t_1$-$\Delta t_5$ have equal duration but the generator varies the voltage frequency f1, f5 in each interval $\Delta t_1$-$\Delta t_5$ in "random" mode; for example, frequency f1 associated to interval $\Delta t_1$ is lower than frequency f2 in interval $\Delta t_2$, which is higher than frequency f3 of interval $\Delta t_3$; the frequency varies further, decreasing, in interval $\Delta t_4$ and increasing in interval $\Delta t_5$. Preferably, all the frequencies ranging between the values of 1 and 100kHz are repeated at least once every 1.5 - 2 hours. This embodiment is advantageous if the voltage frequencies at which bacteria and algae are sensitive are unknown but it is possible to determine the maximum time interval $\Delta t_{max}$ required for preventing the formation thereof. In this case, the duration of intervals $\Delta t_1$-$\Delta t_5$ is set to $\Delta t_{max}$ or to a higher value.

According to another aspect, schematically represented in figure 3, each voltage frequency is associated to an interval with a predetermined duration; for example, frequencies $f_1$, $f_2$, $f_3$ are respectively associated to intervals $\Delta t_{f1}$, $\Delta t_{f2}$, $\Delta t_{f3}$. The generator emits frequencies $f_1$, $f_2$, $f_3$ randomly, such frequencies ranging in the interval 1-100kHz, and the corresponding electrical current is inserted in water by a respective time interval $\Delta t_{f1}$, $\Delta t_{f2}$, $\Delta t_{f3}$. Preferably, in a predetermined time range, for example 1.5 - 2 hours, all frequencies 1-100kHz are generated at least once. The method is very effective when the sensitivity of a bacterium or algae at a respective voltage frequency is known and the bacterium resistance is known as well. In particular, the higher the resistance, the longer is the duration of the time interval $\Delta t_{f1}$ associated to the respective voltage frequency $f_1$.

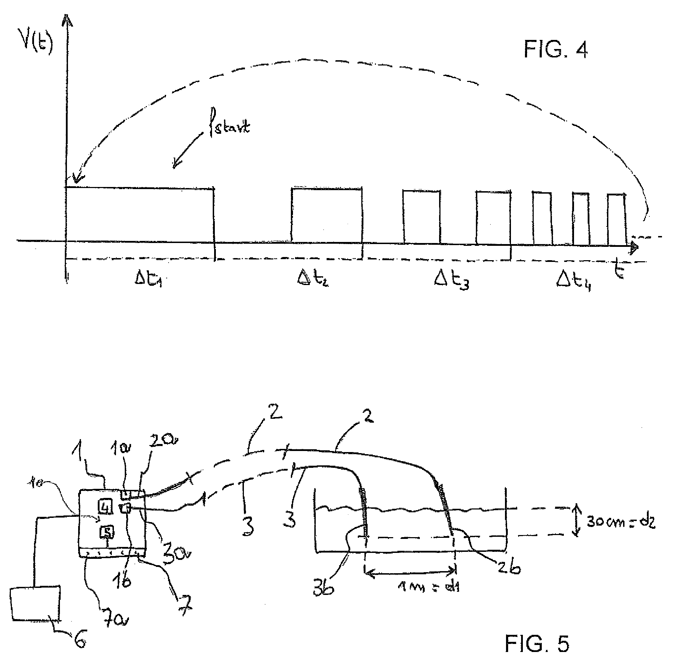

Figure 4 schematically shows the method according to the present invention. The generator cyclically produces the voltage frequencies comprised between 1 and 100 kHz, starting from a predetermined voltage frequency value $f_{start}$ and increasing or decreasing such value by a predetermined step $f_{step}$. For example, according to the example of figure 4, the initial value of the frequency associated to interval $\Delta t_1$ is $f_{start}$ = 1Hz and the increase step is $f_{step}$ = 2, i.e. the voltage frequency is doubled from one interval to the next one. In fact, in interval $\Delta t2$ the frequency is f2=2Hz, in interval $\Delta t3$ the frequency is f3=4Hz, in interval $\Delta t4$ the frequency is f4=8Hz. Preferably, the increase step may be a multiplicative factor lower than 2 (1,000...1), therefore it is possible to substantially scan all the frequencies of the 1-100kHz range. In one embodiment not forming part of the invention, the step is not a multiplicative factor but a constant value added according to the formula

$$fi+1 = fi + step$$

where fi+1 is the frequency in interval $\Delta t_{i+1}$, fi is the frequency in the previous interval $\Delta ti$ and step is the difference between frequency fi+1 and fi. Of course, nothing prevents the initial frequency value $f_{start}$ from being the maximum value and the frequency from being decreased through a multiplicative factor (lower than 1) or by a constant value.

The method described with reference to figures 1-4 is subject to different possible variations. For example, the incremental or decremental variation of frequency described in figure 4 may be changed according to what described with reference to figure 3, that is, associating each frequency to an interval of predetermined duration.

These variations may be made as the experimental data relating to the sensitivity of bacteria and algae to specific voltage frequency values and/or to their resistance to such frequencies are available.

It is worth noting that, with reference to the method described in figures 1-4, the frequency may be a harmonic of the base frequency between 1 and 100kHz.

According to the method of the invention, the current is dispersed by immersing in the water to be treated and by a predetermined extent d2, ends 2b, 3b, of at least two electrodes 2, 3 having opposite ends 2a, 3a connected to a dispersion circuit 10. The electrodes are spaced by a predetermined extent d1, preferably by about 1 m, and immersed in the water to be treated preferably by about 30 cm.

A device for treatment of water against bacteria and algae, for implementing the method described above, is schematically represented in figure 5. In particular, the device comprises a square wave electrical voltage generator 1 and at least one current dispersion circuit 10 connected to generator 1 for receiving the input electrical voltage. The dispersion circuit comprises at least two electrodes; a first electrode 3 is connected to ground and the other electrode 2 receives the voltage at variable frequency from generator 1.

Generator 1 comprises a microprocessor 5 for varying the square wave voltage frequency between 1 and 100kHz.

In particular, the device is powered at low voltage, for example by a 24VDC power supply 6. A stabiliser block 9 is connected in input to the low voltage power supply 6 and in output to microprocessor 5, and supplies a continuous and constant voltage, preferably of 5V, to such microprocessor 5. One or more filters fi are connected between power supply 6 and the stabiliser block 9 and between the latter and microprocessor 5, for further reducing possible voltage variations.

A clock 7 is connected to microprocessor 5 and generates a pulse at time intervals $\Delta t$, for varying the voltage frequency, according to the modes described in the method according to the present invention; preferably, clock 7 generates one pulse every 15 seconds and the microprocessor varies the frequency by 5Hz at each clock pulse. Preferably, electrodes 2, 3 are made of stainless steel.

According to a different embodiment, the dispersion circuit 10 comprises an electrical winding that is not immersed in water but close thereto. The applicant has noted that also such winding is capable of generating the above ionisation current in the water molecules.

According to a preferred embodiment, microprocessor 5 is connected to a LED system for varying a lighting intensity of respective LEDs or a number of the lighted LEDs, according to the voltage frequency f(t) set by microprocessor 5.

The main advantages of the method according to the present invention are as follows.

- the addition of any substances to the water to be treated, or the use of filters subject to wear is not required;

- by varying the voltage frequency it is possible to hinder the formation of any kind of bacteria and algae while not knowing the bacteria or algae's own frequency;

- if the data regarding the bacteria sensitivity and/or resistance to a predetermined voltage are available, it is possible to extend or decrease the time interval of application of a certain voltage frequency;

- the method may easily be applied to a water dispenser, for example upstream of a dispensing tube connected to water mains, or to a swimming pool, immersing two electrodes in the water to be treated which receive the voltage at variable frequency from the generator;

- the treatment device may be made with simple electrical components and does not require any treatment substances, such as chlorine, or material subject to wear, such as water treatment filters;

- the LED system provides the display of the scanning status of the voltage frequencies set for water treatment; when the LED intermittence lighting is substantially imperceptible to the human eye, it means that the frequency set is very high.

## Claims

1. Method for treatment of water against the formation of bacteria and algae comprising the steps of providing a generator generating a voltage (V(t)) and dispersing a corresponding current in the water to be treated, **characterised in that** the voltage (V(t)) generated is a square wave with a frequency (f*(t)) multiple of a frequency (f(t)) ranging between 1 and 100kHz, , wherein said frequency (f(t)) is incremented with a multiplicative factor lower than 2 for cyclically scanning the range 1-100kHz and is associated to a predetermined duration, wherein the frequencies (f*(t)) are harmonics generated by said frequencies (f(t)).

2. Method according to claim 1, **characterised in that** said generator varies said frequency (f(t)) at predetermined time intervals ($\Delta t$).

3. Method according to claim 2, **characterised in that** said predetermined time intervals ($\Delta t_f$) are associated to a respective frequency f(t).

4. Method according to claim 2 or 3, **characterised in that** said frequency (f(t)) is increased by a predetermined extent ($\Delta f$) starting from said value 1, said variation being cyclically repeated when said value of 100kHz is reached.

5. Method according to any one of the previous claims, **characterised in that** said time intervals ($\Delta t$, $\Delta t_f$) have a duration ranging between 1.5 and 2 hours.

6. Method according to claim 1, **characterised in that** said corresponding current is dispersed by immersing the free ends (2a, 3a) of a first and a second electrode (2, 3) respectively connected to said generator (1) and to ground, in the water to be treated and by a predetermined extent (d1).

7. Method according to claim 1, **characterised in that** said corresponding current is dispersed by an electrical winding of a current dispersion circuit, placed in contact with a feeding tube of the water to be treated and externally to said tube.

8. Method according to claim 6, **characterised by** spacing said electrodes by a predetermined extent (d1), preferably by about 1 m, and immersing said electrodes in the water to be treated by a predetermined extent (d2), preferably 30 cm.

## Patentansprüche

1. Verfahren zur Behandlung von Wasser gegen die Bildung von Bakterien und Algen, aufweisend die Schritte des Bereitstellens eines Generators, der eine Spannung (V(t)) erzeugt und einen korrespondierenden Strom in das zu behandelnden Wasser einspeist, **dadurch gekennzeichnet, dass** die erzeugte Spannung (V(t)) eine Rechteckwelle ist mit einer Frequenz (f*(t:)), die ein Vielfaches einer Frequenz (f(t)) ist, die sich von 1 bis 100 kHz erstreckt, wobei die Frequenz (f(t)) mit einem multiplikativen Faktor niedriger als 2 zum periodischen Abtasten des Bereichs von 1-100 kHz erhöht wird und mit einer vorherbestimmten Dauer verknüpft ist, wobei die Frequenzen (f*(t)) Harmonische sind, die durch die Frequenzen (f(t)) erzeugt werden.

2. Verfahren nach Anspruch 1, **dadurch gekennzeichnet, dass** der Generator die Frequenz (f(t)) zu vorherbestimmten Zeitintervallen ($\Delta t$) verändert.

3. Verfahren nach Anspruch 2, **dadurch gekennzeichnet, dass** die vorherbestimmten Zeitintervalle ($\Delta t_f$) mit einer zugehörigen Frequenz f(t) verknüpft sind.

4. Verfahren nach Anspruch 2 oder 3, **dadurch gekennzeichnet, dass** die Frequenz (f(t)) um ein vorherbestimmtes Maß ($\Delta f$) erhöht wird, wobei mit dem Wert 1 begonnen wird und die Veränderung periodisch wiederholt wird, wenn der Wert 100 kHz erreicht ist.

5. Verfahren nach einem der vorhergehenden Ansprüche, **dadurch gekennzeichnet, dass** die Zeitintervalle ($\Delta t$, $\Delta t_f$) eine Dauer aufweisen, die sich von 1,5 bis 2 Stunden erstreckt.

6. Verfahren nach Anspruch 1, **dadurch gekennzeichnet, dass** der korrespondierende Strom eingespeist wird, indem die freien Enden (2a, 3a) einer ersten und einer zweiten Elektrode (2, 3), die mit dem Generator (1) beziehungsweise Masse verbunden sind, in das zu behandelnde Wasser und um ein vorherbestimmtes Maß eingetaucht werden.

7. Verfahren nach Anspruch 1, **dadurch gekennzeichnet, dass** der korrespondierende Strom durch eine elektrische Windung eines Stromverteilungskreises eingespeist wird, der in Kontakt mit einem Zufuhrrohr des zu behandelnden Wassers und extern zu dem Rohr angeordnet ist.

8. Verfahren nach Anspruch 6, **dadurch gekenn-**

zeichnet, dass die Elektroden um ein vorherbestimmtes Maß (d1), bevorzugt um etwa 1 m, beabstandet werden, und die Elektroden in das zu behandelnde Wasser um ein vorherbestimmtes Maß (d2), bevorzugt 30 cm, eingetaucht werden.

ce que les dites électrodes sont séparées par une distance prédéterminées (d1), de préférence d'environ 1 m, et l'immersion des dites électrodes dans l'eau à traiter sur une longueur prédéterminée (d2), de préférence de 30 cm.

## Revendications

1. Méthode de traitement de l'eau contre la formation de bactéries et d'algues comprenant les étapes d'alimenter un générateur produisant une tension (V(t)) et de disperser un courant correspondant dans l'eau à traiter, **caractérisée en ce que** la tension (V(t)) générée est une onde carrée avec une fréquence (f*(t)) multiple d'une fréquence (f(t)) comprise entre 1 et 100 kHz, où la dite fréquence (f(t)) est incrémentée par un facteur multiplicateur inférieur à 2 pour le scannage cyclique de la gamme comprise entre 1 et 100 kHz et est associée à une durée prédéterminée, où les fréquences (f*(t)) sont des harmoniques générées par les dites fréquences (f(t)).

2. Méthode selon la revendication 1, **caractérisée en ce que** le dit générateur fait varier la dite fréquence (f(t)) selon des intervalles temporels prédéterminés ($\Delta$t).

3. Méthode selon la revendication 2, **caractérisée en ce que** les dits intervalles de temps prédéterminés ($\Delta t_f$) sont associés à une fréquence respective f(t).

4. Méthode selon la revendication 2 ou 3, **caractérisée en ce que** la dite fréquence (f(t)) est augmentée dans une mesure prédéterminée ($\Delta$f) à partir de la dite valeur 1, la dite variation étant répétée de manière cyclique quand la dite valeur de 100 kHz est atteinte.

5. Méthode selon l'une quelconque des revendications précédentes, **caractérisée en ce que** les dits intervalles temporels ($\Delta$t, $\Delta t_f$) ont une durée comprise entre 1,5 et 2 heures.

6. Méthode selon la revendication 1, **caractérisée en ce que** le dit courant correspondant est dispersé en immergeant les extrémités libres (2a, 3a) d'une première et d'une deuxième électrode (2, 3) respectivement connectées au dit générateur (1) et à la terre, dans l'eau à traiter et sur une longueur prédéterminée.

7. Méthode selon la revendication 1, **caractérisée en ce que** le dit courant correspondant est dispersé par un bobinage électrique d'un circuit de dispersion du courant, placé en contact avec un tuyau d'alimentation en eau à traiter et à l'extérieur du dit tuyau.

8. Méthode selon la revendication 6, **caractérisée en**

FIG. 1

$V(t)$

$\ell_1$   $\ell_2$   $\ell_3$   $\ell_4$   $\ell_5$

$\Delta t_1$   $\Delta t_2$   $\Delta t_3$   $\Delta t_4$   $\Delta t_5$   $t$

FIG. 2

$V(t)$

$\Delta t_1$   $\Delta t_2$   $\Delta t_3$   $\Delta t_4$   $\Delta t_5$   $t$

FIG. 3

$V(t)$

$\ell_1$   $\ell_2$   $\ell_3$   $\ell_2$   $\ell_3$

$\Delta t_{\ell_1}$   $\Delta t_{\ell_2}$   $\Delta t'_{\ell_3}$   $\Delta t_{\ell_2}$   $\Delta t'_{\ell_3}$

FIG. 4

$V(t)$

$I_{start}$

$\Delta t_1$   $\Delta t_2$   $\Delta t_3$   $\Delta t_4$   $t$

FIG. 5

$1$  $1a$  $2a$  $2$  $2$

$1b$  $3a$  $7$  $3$  $3$

$6$  $7a$  $3b$  $2b$

$30\,cm = d_2$

$1\,m = d_1$

FIG. 6

80 – 240 VAC
0,16 A

+20 VAC

0 VAC

POWER led

5V

FIG. 7

**REFERENCES CITED IN THE DESCRIPTION**

**Patent documents cited in the description**

- US 2006086604 A
- US 5776529 A
- WO 2009025546 A